# EUROPEAN PATENT APPLICATION

(11) **EP 4 496 055 A2**
(43) Date of publication of application: **22.01.2025**
(21) Application number: 24185013.0
(22) Date of filing: 27.06.2024
(51) Int. Cl.: H01M 10/04, H01M 10/42, H01M 50/105, H01M 50/124, H01M 50/178, H01M 50/46, H01M 50/466

(54) **SECONDARY BATTERY AND METHOD OF MANUFACTURING SECONDARY BATTERY**

(30) Priority: 07.07.2023 JP 2023112208
(71) Applicant: Mazda Motor Corporation, Aki-gun Hiroshima 730-8670 (JP)
(72) Inventor: KOYAMA, Masanari, Aki-gun, Hiroshima 730-8670 (JP); ISHIKAWA, Takaaki, Aki-gun, Hiroshima 730-8670 (JP); KAJIMOTO, Takanori, Aki-gun, Hiroshima 730-8670 (JP)
(74) Representative: Müller-Boré & Partner Patentanwälte PartG mbB

(57) **Abstract**

A secondary battery 1 includes a negative electrode 3 and a positive electrode 4 that are immersed in electrolytic liquid, and a separator 33 that separates the negative electrode and the positive electrode from each other, wherein the negative electrode has a current collector (negative electrode current collector 31) and a mixture layer (negative electrode mixture layer 32), the mixture layer has a main surface 34 that faces the positive electrode via the separator and a side face (first side face 35) that makes connection between the main surface and the current collector, and the separator at least covers the mixture layer of the negative electrode in a state of being in contact with the main surface and the side face.

## Description

### [Technical Field]

The present invention relates to a secondary battery and a method of manufacturing a secondary battery.

### [Background Art]

Patent Literature 1 discloses a conventional lithium secondary battery. The conventional lithium secondary battery includes a space holding member between an exposed portion of a negative electrode current collector and a separator. The space holding member secures a space required for expansion/contraction of a negative electrode mixture due to charge and discharge of the secondary battery. Not to obstruct the expansion/contraction of the negative electrode mixture restrains capacity decrease due to repetition of the charge and discharge.

### [Citation List]

### [Patent Literature]

[Patent Literature 1] Japanese Patent Laid-Open No. 2007-242262

### [Summary]

### [Problems to be Solved]

Investigation by the inventors of the present application has revealed that, when the positive electrode mixture and the negative electrode mixture repeats expansion/contraction due to repetition of charge and discharge of the secondary battery, electrolytic liquid included in the positive electrode mixture and the negative electrode mixture seeps out and the amount of the electrolytic liquid included in the positive electrode mixture and the negative electrode mixture decreases. When the amount of the electrolytic liquid included in the positive electrode mixture and the negative electrode mixture decreases, the capacity of the secondary battery decreases.

The object of the present invention is to restrain deterioration in cycle characteristics of a secondary battery.

The present invention is defined in independent claims. Particularly, a secondary battery includes:
a negative electrode and a positive electrode that are immersed in electrolytic liquid; and
a separator that separates the negative electrode and the positive electrode from each other, wherein
the negative electrode has a current collector and a mixture layer on the current collector,
the mixture layer has a main surface that faces the positive electrode via the separator and a side face that makes connection between the main surface and the current collector, and
the separator at least covers the mixture layer of the negative electrode in a state of being in contact with the main surface and the side face.

The separator of the aforementioned secondary battery at least covers the mixture layer of the negative electrode. More in detail, the mixture layer has the main surface and the side face, and the separator covers the mixture layer in the state of being in contact with the main surface and the side face. The separator restrains expansion/contraction of the mixture layer in charging and discharging the secondary battery. Restraining the expansion/contraction of the mixture layer restrains the electrolytic liquid from seeping out from the mixture layer. Moreover, the separator restrains the electrolytic liquid seeping out from the mixture layer from flowing out. Since decrease of the amount of the electrolytic liquid included in the mixture layer is restrained, deterioration in cycle characteristics of the secondary battery is restrained.

Note that the separator may cover a mixture layer of the positive electrode. The separator that covers the mixture layer of the positive electrode restrains decrease of the amount of the electrolytic liquid included in the mixture layer. In general, as the positive electrode and the negative electrode are compared, the mixture layer of the negative electrode shows a higher degree of expansion/contraction. The decrease of the amount of the electrolytic liquid can be more significant at the negative electrode. The separator covering the mixture layer of the negative electrode is effective for restraining deterioration in cycle characteristics of the secondary battery.

Here, the separator may be formed, for example, by applying slurry including a resin and a solvent onto the main surface and the side face of the mixture layer, and afterward, drying the applied slurry. By the solvent being evaporated, the separator that is a porous separator and covers the mixture layer in the state of being in contact with the main surface and side face of the mixture layer is attained.

Moreover, the separator may be an insulating material including ceramics, for example. In this case, it can be formed by applying slurry including a ceramic material and a solvent onto the main surface and the side face of the mixture layer, and afterward, drying the applied slurry. For the ceramic material, alumina, boehmite, aramid, polyvinylidene fluoride, and the like can be used. A dimension in the case of using the ceramic material may be about 1.0 to 5.0 µm, for example.

In the separator that is in contact with the side face between the current collector and the main surface, a thickness on the current collector side may be larger than a thickness on the main surface side.

As to the thickness of the separator, on the side face of the mixture layer, the thickness on the current collector side is relatively larger. The mixture layer is much more restrained, on the current collector side, from expanding/contracting. That, on the current collector side, the mixture layer is restrained from expanding/contracting restrains the mixture layer from being peeled off from the current collector. Making the thickness of the separator on the current collector side relatively larger much more effectively restrains deterioration in cycle characteristics of the secondary battery.

The negative electrode may have a holding portion that is joined to the current collector to be spaced apart from the side face of the mixture layer and faces the side face.

The holding portion joined to the current collector faces the separator covering the side face of the mixture layer and restrains the separator from separating from the side face of the mixture layer. For example, the holding part interferes with the separator composed of a porous film, and thereby, restrains the separator from separating from the side face of the mixture layer.

Moreover, when the separator is formed by applying slurry onto the mixture layer, the holding portion restrains the slurry applied onto the side face from going along the surface of the current collector to flow off from the mixture layer. The holding portion restrains, in manufacturing the secondary battery, the separator from separating from the side face of the mixture layer.

The separator is held in the state of being in contact with the mixture layer in manufacture or after manufacture of the secondary battery.

The secondary battery may further include a pouch that houses an electricity generation element including the negative electrode, the positive electrode, and the separator, and the electrolytic liquid,
the current collector may protrude outward of the pouch from an opening of the pouch, and
the holding portion may be a resin that seals the opening of the pouch.

When the holding portion is used for both holding the separator and sealing the pouch, the number of the members of the secondary battery can be reduced.

The current collector of the negative electrode may have a recess portion that is recessed from a surface of the current collector between the mixture layer and the holding portion.

The recess portion restrains the separator from separating from the side face of the mixture layer. For example, the separator composed of a porous film interferes with the recess portion. The separator is restrained from separating from the side face of the mixture layer.

Moreover, when the separator is formed by applying slurry onto the mixture layer, the recess portion restrains the slurry applied onto the side face from going along the surface of the current collector to flow off from the mixture layer. The recess portion restrains, in manufacturing the separator, the separator from separating from the side face of the mixture layer.

### [Advantageous Effects]

Since in the aforementioned secondary battery, at least the mixture layer of the negative electrode is restrained from expanding/contracting in charging and discharging the secondary battery, its cycle characteristics can be restrained from deteriorating.

### [Brief Description of Drawings]

FIG. 1 is a sectional view of a secondary battery.
FIG. 2 is a sectional view of a negative electrode.
FIG. 3 is a sectional view taken along the III-III line in FIG. 2.
FIG. 4 is a sectional view of a negative electrode and a positive electrode of a secondary battery according to a modification.
FIG. 5 is a sectional view of a negative electrode of a secondary battery according to a modification.
FIG. 6 is a sectional view of a secondary battery according to a modification.

### [Embodiments for Carrying Out the Invention]

Hereafter, embodiments of a secondary battery will be described with reference to the drawings. Secondary batteries described herein are exemplary illustrations.

### (Overall Structure of Secondary Battery)

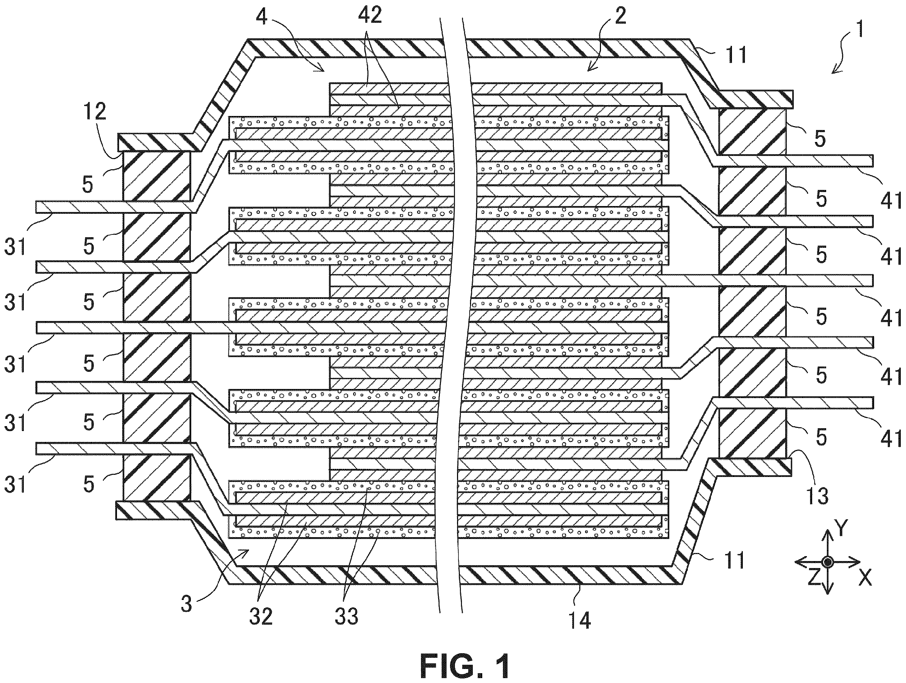

FIG. 1 schematically shows an overall structure of a secondary battery 1. The secondary battery 1 in FIG. 1 is a battery cell that houses an electricity generation element 2 in a pouch 14. An example of the secondary battery 1 may be a lithium-ion battery.

The pouch 14 may be obtained by folding one laminate material 11 or laminating two laminate materials 11 into a bag shape. For example, the laminate material 11 may have a trilayer structure obtained by interposing both sides of a metal layer between resin layers. An example of the metal layer is aluminum or stainless steel. An example of the resin layers is polypropylene (PP) or polyethylene (PE). The pouch 14 may be hermetically sealed in the state where the electricity generation element 2 and electrolytic liquid are housed. The secondary battery 1 is what is called a pouch-type battery.

The electricity generation element 2 has negative electrodes 3 and positive electrodes 4. The negative electrodes 3 and the positive electrodes 4 are immersed in the electrolytic liquid inside the pouch 14. The negative electrodes 3 and the positive electrodes 4 are alternately laminated. The numbers of the negative electrodes 3 and the positive electrodes 4 are optional. As to the numbers of the negative electrodes 3 and the positive electrodes 4, for example, a larger number of negative electrodes 3 may be employed. The electricity generation element 2 is an electrode laminate body. Note that a direction in which the negative electrodes 3 and the positive electrodes 4 are laminated is hereafter called the Y-direction.

The negative electrode 3 has a negative electrode current collector 31. The negative electrode current collector 31 is a plate material thin in thickness and extending in the X-direction perpendicular to the Y-direction. A first end portion of the negative electrode current collector 31, in other words, a left end portion thereof in FIG. 1 protrudes outward from a first opening 12 of the pouch 14. Note that the X-direction is a direction in which the negative electrode current collectors 31 and positive electrode current collectors 41 mentioned later protrude in the secondary battery 1. Moreover, the direction perpendicular to the X-direction and the Y-direction is called the Z-direction. In other words, the Z-direction is a direction perpendicular to the direction in which the negative electrode current collectors 31 and the positive electrode current collectors 41 protrude.

A negative electrode active material may be applied onto an upper surface and/or a lower surface of the negative electrode current collector 31 positioned inside the pouch 14. The negative electrode active material forms negative electrode mixture layers 32 on the negative electrode current collector 31.

The negative electrode 3 has separators 33. The separator 33 separates the negative electrode mixture layer 32 of the negative electrode 3 and a positive electrode mixture layer 42 of the positive electrode 4 from each other. The separators 33 cover the respective surfaces of the two negative electrode mixture layers 32. Details of a structure of the separator 33 are described later.

The positive electrode 4 has a positive electrode current collector 41. The positive electrode current collector 41 may be a plate material thin in thickness and extending in the X-direction. A second end portion of the positive electrode current collector 41, in other words, a right end portion in FIG. 1 protrudes outward from a second opening 13 of the pouch 14. The second opening 13 may be an opposite opening to the first opening 12 in the X-direction. Note that the protruding direction of the positive electrode current collector 41 is not limited to the opposite side relative to the negative electrode current collector 31.

A positive electrode active material may be applied onto an upper surface and a lower surface of the positive electrode current collector 41 positioned inside the pouch 14. The positive electrode active material forms positive electrode mixture layers 42 to which the positive electrode current collector 41 is connected.

As mentioned above, the negative electrodes 3 and the positive electrodes 4 are alternately laminated. The negative electrode mixture layers 32 and the positive electrode mixture layers 42 are stacked inside the pouch 14 via the separators 33 in the laminating direction. An area of the negative electrode mixture layer 32 may be, for example, larger than an area of the positive electrode mixture layer 42. In the protruding direction of the positive electrode current collector 41, the negative electrode mixture layer 32 may more protrude than the positive electrode mixture layer 42.

The first opening 12 of the pouch 14 may be sealed with resins 5. The resins 5 are positioned between the laminate material 11 and the negative electrode current collectors 31 and between the negative electrode current collectors 31. Likewise, the second opening 13 may be sealed with resins 5. The resins 5 are positioned between the laminate material 11 and the positive electrode current collectors 41 and between the positive electrode current collectors 41.

The plurality of negative electrode current collectors 31 may not be connected inside the pouch 14 and may individually protrude outward of the pouch 14. Likewise, the plurality of positive electrode current collectors 41 may not be connected inside the pouch 14 and may individually protrude outward of the pouch 14. Since, inside the pouch 14, connection spaces for the negative electrode current collectors 31 and the positive electrode current collectors 41 can be omitted, there can be made large, by the amounts of those, the areas of the negative electrode mixture layers 32 and the positive electrode mixture layers 42. Therefore, the energy density of the secondary battery 1 can be made high.

### (Structure of Separator)

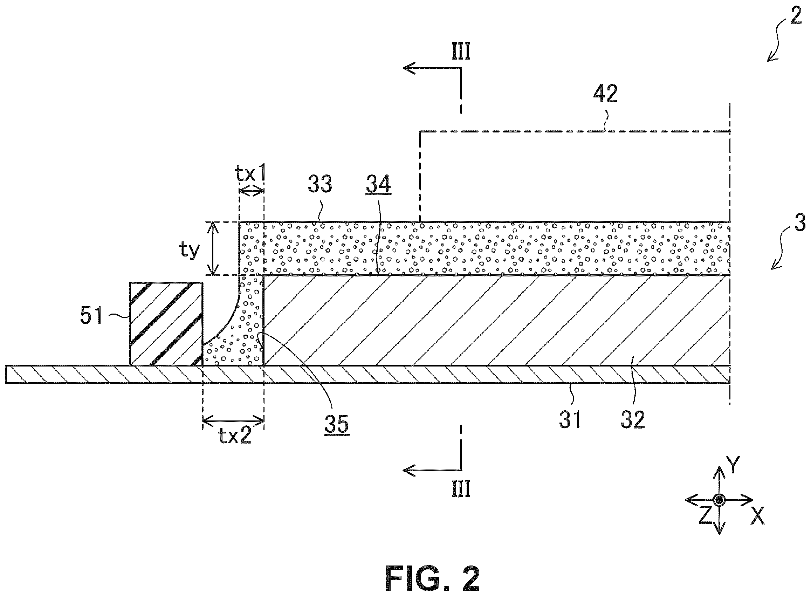

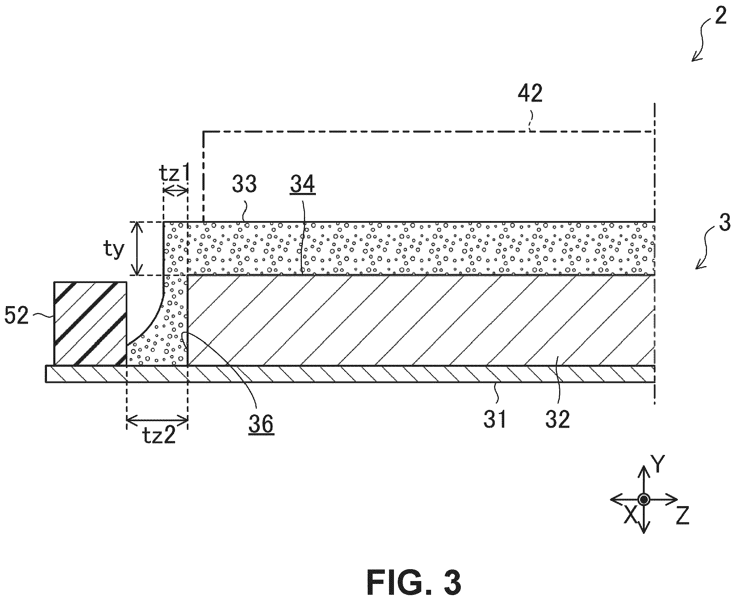

Next, a structure of the separator 33 is described in detail with reference to FIG. 2 and FIG. 3. FIG. 2 shows a cross section of one negative electrode 3 included in the electricity generation element 2. FIG. 3 is a sectional view taken along the III-III line in FIG. 2.

As mentioned above, the negative electrode mixture layer 32 is positioned on the negative electrode current collector 31. Note that in FIG. 2, from a viewpoint of making understanding easy, only the negative electrode mixture layer 32 and the separator 33 that are on the upper surface of the negative electrode current collector 31 are shown. The negative electrode mixture layer 32 and the separator 33 that are on the lower surface of the negative electrode current collector 31 also have the same structures as those of the negative electrode mixture layer 32 and the separator 33 on the upper surface.

The negative electrode mixture layer 32 has a main surface 34 and side faces 35 and 36. The main surface 34 is a surface that faces the positive electrode mixture layer 42 via the separator 33. The side faces 35 and 36 are faces that make connection between the main surface 34 and the negative electrode current collector 31. Side Faces include a first side face 35 (refer to FIG. 2) oriented in the X-direction and a second side face 36 (refer to FIG. 3) oriented in the Z-direction.

An example of the separator 33 may be a porous body that an ionic substance can permeate through. The separator 33 may be formed, for example, by applying slurry including a resin and a solvent onto the main surface 34, the first side face 35, and the second side face 36 of the negative electrode mixture layer 32, and afterward, drying the slurry. By the solvent being vaporized, the separator 33 is made into the porous body, and the separator 33 covers the negative electrode mixture layer 32 in the state of being in contact with the main surface 34, the first side face 35, and second side face 36 of the negative electrode mixture layer 32. Examples of the resin for forming the separator 33 can include polyethylene, polypropylene, an aromatic polyamide resin, or a liquid crystal polyester resin. Examples of the solvent can include water, methyl ethyl ketone, acetone, or an alcohol (for example, ethanol). Note that the method of forming the separator 33 is not limited to application of slurry.

Here, holding portions 51 and 52 may be joined onto the surface of the negative electrode current collector 31. The holding portion 51 may face the first side face 35 of the negative electrode mixture layer 32 to be spaced apart from the first side face 35 at a predetermined distance. The holding portion 52 may face the second side face 36 to be spaced apart from the second side face 36 at a predetermined distance.

The holding portions 51 and 52 restrains, in forming the separator 33, the slurry applied onto the first side face 35 and the second side face 36 of the negative electrode mixture layer 32 from going along the surface of the negative electrode current collector 31 to flow off from the negative electrode mixture layer 32. The holding portions 51 and 52 restrain, in manufacturing the secondary battery 1, the separator 33 from separating from the side faces 35 and 36 of the negative electrode mixture layer 32.

Moreover, the holding portions 51 constitute the resins 5 that seal the first opening 12 of the pouch 14 in the secondary battery 1. In other words, in the electricity generation element 2 in which the negative electrodes 3 and the positive electrodes 4 are laminated, the holding portions 51 line up in the laminating direction. In manufacturing the secondary battery 1, after the electricity generation element 2 is covered by the laminate material 11, the holding portions 51 lining up in the laminating direction are pressurized and heated from the outer sides to the center side in the laminating direction. By the holding portions 51 being welded to the negative electrode current collectors 31 or the holding portions 51 being welded together, an edge of the laminate material 11 is sealed. Note that holding portions that seal the second opening 13 of the pouch 14 are joined to the positive electrode current collectors 41 of the positive electrodes 4.

The separator 33 covers the negative electrode mixture layer 32 in the state of being in contact with the main surface 34, the first side face 35, and the second side face 36 of the negative electrode mixture layer 32. Particularly, a gap does not exist or does not substantially exist between the separator 33 and each of the main surface 34, the first side face 35, and the second side face 36.

A thickness ty of the separator 33 in contact with the main surface 34, i.e., the thickness ty in the Y-direction, may be larger than a thickness tx1 or tz1 of the separator 33 in contact with the first side face 35. The thickness ty may be set to be not less than 5 µm and not more than 30 µm, for example. The thickness tx1 or tz1 may be set to be not less than 1 µm and not more than 15 µm, for example.

Moreover, in the separator 33 that is in contact with the first side face 35 or the second side face 36, a thickness tx2 or tz2 on the negative electrode current collector 31 side may be larger than the thickness tx1 or tz1 on the main surface 34 side.

Particularly, in the separator 33 that is in contact with the first side face 35, the thickness tx2 of the separator 33 in the X-direction on the negative electrode current collector 31 side is larger than the thickness tx1 of the separator 33 in the X-direction on the main surface 34 side.

Further particularly, in the separator 33 that is in contact with the second side face 36, the thickness tz2 of the separator 33 in the Z-direction on the negative electrode current collector 31 side is larger than the thickness tz1 of the separator 33 in the Z-direction on the main surface 34 side.

As mentioned above, the separator 33 of the secondary battery 1 covers the negative electrode mixture layer 32. More in detail, the separator 33 covers the negative electrode mixture layer 32 in the state of being in contact with the main surface 34, the first side face 35, and the second side face 36 of the negative electrode mixture layer 32. In charging and discharging the secondary battery 1, the separator 33 restrains the negative electrode mixture layer 32 from expanding/contracting. Restraining the negative electrode mixture layer 32 from expanding/contracting restrains the electrolytic liquid from seeping out from the negative electrode mixture layer 32. Moreover, the separator 33 restrains the electrolytic liquid seeping out from the negative electrode mixture layer 32 from flowing out. The negative electrode mixture layer 32 holds the electrolytic liquid even when the secondary battery 1 repeats charge and discharge. The capacity of the secondary battery 1 is restrained from decreasing. In other words, deterioration in cycle characteristics of the secondary battery 1 is restrained.

In a lithium-ion battery, in general, expansion/contraction of the negative electrode mixture layer 32 is larger than expansion/contraction of the positive electrode mixture layer 42. That the separator 33 restrains the expansion/contraction of the negative electrode mixture layer 32 is particularly effective for restraining deterioration in cycle characteristics of the lithium-ion battery.

Note that the separator 33 may be able to deform elastically. The separator 33 capable of elastically deforming can restrain damage at the time when the negative electrode mixture layer 32 is about to expand/contract.

On the first side face 35 or the second side face 36 of the negative electrode mixture layer 32, as to the thickness of the separator 33, the thickness (tx2, tz2) on the current collector side is relatively larger. While the negative electrode mixture layer 32 is joined to the negative electrode current collector 31, the separator 33 much more restrains, on the current collector side, the negative electrode mixture layer 32 from expanding/contracting. That, on the current collector side, the negative electrode mixture layer 32 is restrained from expanding/contracting restrains the negative electrode mixture layer 32 from being peeled off from the negative electrode current collector 31. Making the thickness of the separator 33 on the current collector side relatively larger is effective for restraining the secondary battery 1 from deteriorating.

Moreover, as well as holding the separator 33 in manufacture of the secondary battery 1, the aforementioned holding portions 51 and 52 interfere with the separator 33 even after the manufacture of the secondary battery 1, and thereby, restrain the separator 33 from separating from the negative electrode mixture layer 32. The separator 33 is held in the state of being in contact with the negative electrode mixture layer 32 in manufacture or after manufacture of the secondary battery 1.

Note that the separator 33 on the second side face 36 can be omitted.

### (Modification 1)

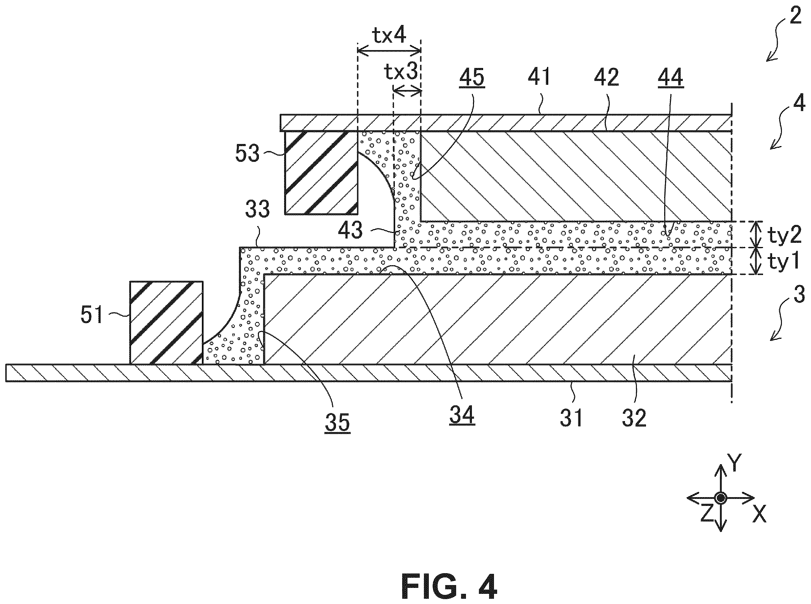

FIG. 4 shows a modification regarding the separators. The separators may be respectively formed in the negative electrode 3 and the positive electrode 4.

A separator 43 of the positive electrode 4 may cover the positive electrode mixture layer 42. More in detail, the positive electrode mixture layer 42 has a main surface 44 and a side face 45. The separator 43 covers the positive electrode mixture layer 42 in the state of being in contact with the main surface 44 and the side face 45.

Here, the separator 43 of the positive electrode 4 and the separator 33 of the negative electrode 3 overlap in the Y-direction between the positive electrode mixture layer 42 and the negative electrode mixture layer 32. Each of a thickness ty1 of the separator 33 of the negative electrode 3 and a thickness ty2 of the separator 43 of the positive electrode 4 may be smaller than the thickness ty of the separator 33 in FIG. 2. The sum total of the thickness ty1 and the thickness ty2 may be equal to or substantially equal to the thickness ty of the separator 33 in FIG. 2. Note that the thickness ty1 and the thickness ty2 may be equal to or different from each other.

Moreover, in the separator that is in contact with the side face 45 of the positive electrode mixture layer 42, a thickness tx4 on the positive electrode current collector 41 side may be larger than a thickness tx3 on the main surface 44 side.

Particularly, in the separator that is in contact with the side face 45 of the positive electrode mixture layer 42, the thickness tx4 of the separator 43 in the X-direction on the positive electrode current collector 41 side may be larger than the thickness tx3 of the separator 43 in the X-direction on the main surface 44 side.

Since the separator 43 covers the positive electrode mixture layer 42, the positive electrode mixture layer 42 is restrained from expanding/contracting in charging and discharging the secondary battery 1. The electrolytic liquid is restrained from seeping out from the positive electrode mixture layer 42. For the secondary battery 1, in each of the positive electrode mixture layer 42 and the negative electrode mixture layer 32, decrease of the amount of the electrolytic liquid is restrained. Both the positive electrode mixture layer 42 and the negative electrode mixture layer 32 can hold the electrolytic liquid even when the secondary battery 1 repeats charge and discharge. The capacity of the secondary battery 1 is restrained from decreasing even when charge and discharge are repeated. In other words, deterioration in cycle characteristics of the secondary battery 1 is restrained.

As with the negative electrode mixture layer 32, also on the side face 45 of the positive electrode mixture layer 42, as to the thickness of the separator 43, the thickness on the current collector side may relatively larger. The positive electrode mixture layer 42 is restrained from being peeled off from the positive electrode current collector 41.

The separator 43 of the positive electrode 4 can also be formed by the similar technique to that for the separator 33 of the negative electrode 3. The positive electrode 4 has a holding portion 53. The holding portion 53 faces the side face 45 of the positive electrode mixture layer 42 to be spaced apart from the side face 45 at a predetermined distance.

The holding portion 53 restrains, in forming the separator 43, slurry applied onto the side face 45 of the positive electrode mixture layer 42 from going along the surface of the positive electrode current collector 41 to flow off from the positive electrode mixture layer 42. Moreover, also after manufacture of the secondary battery 1, the holding portion 53 interferes with the separator 43, and thereby, restrains the separator 43 from separating from the positive electrode mixture layer 42.

Moreover, holding portions of the positive electrode 4 may constitute the resins 5 that seal the second opening 13 (refer to FIG. 1) of the pouch 14 in the secondary battery 1.

### (Modification 2)

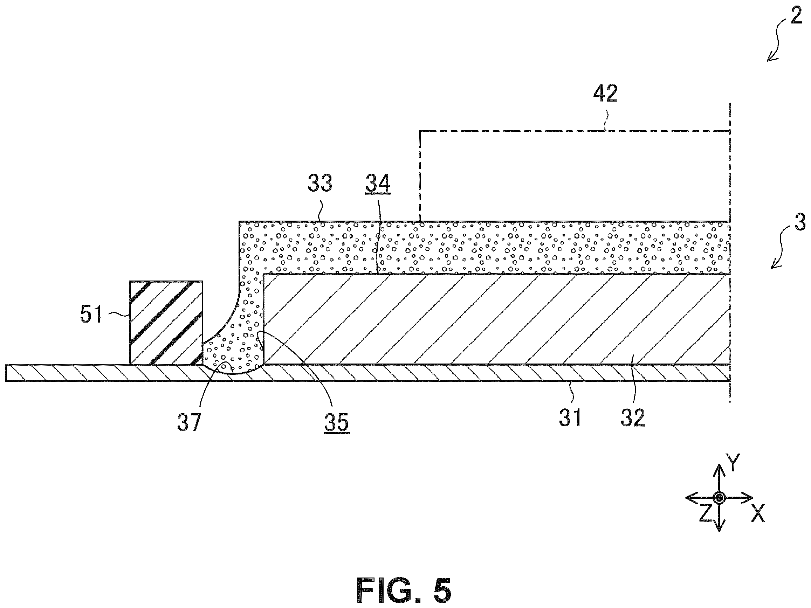

FIG. 5 is a modification regarding the current collector. A recess portion 37 for holding the separator may be formed in the current collector.

The recess portion 37 may be recessed from a surface of the negative electrode current collector 31. The recess portion 37 may be positioned between the negative electrode mixture layer 32 and the holding portion 51.

When the slurry is applied onto the negative electrode mixture layer 32, the recess portion 37 restrains the slurry applied onto the first side face 35 from going along the surface of the negative electrode current collector 31 to flow off from the negative electrode mixture layer 32. The recess portion 37 restrains, in manufacture of the secondary battery 1, the separator 33 from separating from the side face of the negative electrode mixture layer 32.

Moreover, also after manufacture of the secondary battery 1, the recess portion 37 interferes with the separator 33, and thereby, restrains the separator 33 from separating from the first side face 35 of the negative electrode mixture layer 32.

### (Modification 3)

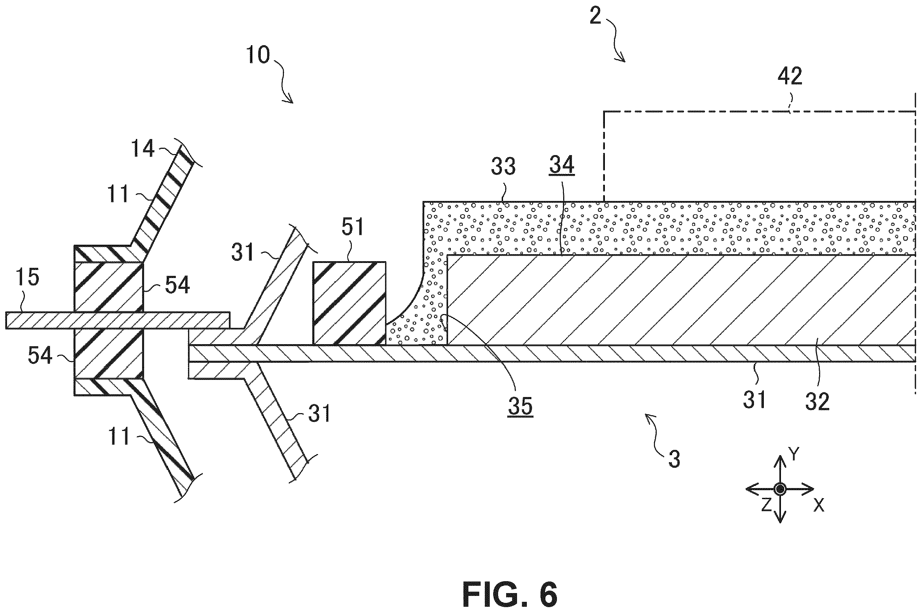

FIG. 6 shows a modification regarding the structure of the secondary battery. In the secondary battery 1 in FIG. 1, the plurality of negative electrode current collectors 31 and the plurality of positive electrode current collectors 41 individually protrude outward from the openings 12 and 13 of the pouch 14. In a secondary battery 10 in FIG. 6, the plurality of negative electrode current collectors 31 are connected to one another inside the pouch 14. A tab 15 connected to a collected portion of the negative electrode current collectors 31 protrudes outward of the pouch 14. In other words, the tab 15 is joined to an edge of the laminate material 11 via resins 54. In the secondary battery 10, while the holding portion 51 has a function of holding the separator 33, it does not seal the opening of the pouch 14.

Note that in the secondary battery 10, as with the negative electrode current collectors 31, the positive electrode current collectors 41 may also be connected to one another inside the pouch 14.

### (Another Embodiment)

Note that, as well as being formed by applying slurry as mentioned above, the separators 33 and 44 may also be formed using porous films. In other words, the mixture layer may also be covered by a porous film in the state where the porous film is in contact with the main surface and the side faces of the mixture layer. The holding portion 51, 52, 53 or the recess portion 37 interferes with the separator composed of the porous film, and thereby, can restrain the separator from separating from the side face of the mixture layer.

Moreover, features of the aforementioned plurality of configurations can be combined as much as possible.

### [Reference Signs List]

- 1: secondary battery
- 10: secondary battery
- 12, 13: opening
- 14: pouch
- 2: electricity generation element
- 3: negative electrode
- 31: negative electrode current collector
- 32: negative electrode mixture layer
- 33: separator
- 34: main surface
- 35: first side face
- 36: second side face
- 37: recess portion
- 4: positive electrode
- 41: positive electrode current collector
- 42: positive electrode mixture layer
- 43: separator
- 44: main surface
- 45: side face
- 5: resin
- 51: holding portion
- 52: holding portion
- 53: holding portion

## Claims

1. A secondary battery (1) comprising:
a negative electrode (3) and a positive electrode (4) that are immersed in electrolytic liquid; and
a separator (33) that is configured to separate the negative electrode (3) and the positive electrode (4) from each other, wherein
the negative electrode (3) has a current collector (31) and a mixture layer (32) on the current collector (31),
the mixture layer (32) has a main surface (34) that faces the positive electrode (4) via the separator (33) and side faces (35, 36) that make connection between the main surface (34) and the current collector (31), and
the separator (33) at least covers the mixture layer (32) of the negative electrode (3) in a state of being in contact with the main surface (34) and the side faces (35, 36).

2. The secondary battery (1) according to claim 1, wherein in the separator (33) that is in contact with the side faces (35, 36) between the current collector (31) and the main surface (34), a thickness (tx2, tz2) on the current collector side is larger than a thickness (tx1, tz1) on the main surface side.

3. The secondary battery according to claim 1 or 2, wherein the negative electrode (3) has a holding portion (51, 52) that is joined to the current collector (31) to be spaced apart from the side faces (35, 36) of the mixture layer (32) and faces the side faces (35, 36).

4. The secondary battery (1) according to claim 3, further comprising:
a pouch (14) that houses an electricity generation element (2) including the negative electrode (3), the positive electrode (4), and the separator (33), and the electrolytic liquid, wherein
the current collector (31) protrudes outward of the pouch (14) from an opening (12) of the pouch (14), and
the holding portion (51) is a resin (5) that is configured to seal the opening (12) of the pouch (14).

5. The secondary battery (1) according to Claim 3 or 4, wherein the current collector (31) of the negative electrode (3) has a recess portion (37) that is recessed from a surface of the current collector between the mixture layer (32) and the holding portion (51).

6. The secondary battery (1) according to any one of the preceding Claims, wherein the secondary battery (1) is a lithium-ion battery.

7. A method of manufacturing a secondary battery (1), the secondary battery (1) comprising a negative electrode (3) and a positive electrode (4) that are immersed in electrolytic liquid, wherein the negative electrode (3) has a current collector (31) and a mixture layer (32) on the current collector (31), the method comprising:
separating the negative electrode (3) and the positive electrode (4) from each other by a separator (33), wherein the mixture layer (32) has a main surface (34) that faces the positive electrode (4) via the separator (33) and side faces (35, 36) that make connection between the main surface (34) and the current collector (31); and
covering at least the mixture layer (32) of the negative electrode (3) by the separator (33) in a state of being in contact with the main surface (34) and the side faces (35, 36).

8. The method according to claim 7, wherein in the separator (33) that is in contact with the side faces (35, 36) between the current collector (31) and the main surface (34), a thickness (tx2, tz2) on the current collector side is larger than a thickness (tx1, tz1) on the main surface side.

9. The method according to claim 7 or 8, further comprising:
joining a holding portion (51, 52) to the current collector (31) to be spaced apart from the side faces (35, 36) of the mixture layer (32) and faces the side faces (35, 36).

10. The method according to claim 9, further comprising:
housing an electricity generation element (2) including the negative electrode (3), the positive electrode (4), and the separator (33), and the electrolytic liquid by a pouch (14);
protruding the current collector (31) outward of the pouch (14) from an opening (12) of the pouch (14);
sealing the opening (12) of the pouch (14) by the holding portion (51), wherein the holding portion (51) is a resin (5).

11. The method according to Claim 9 or 10, further comprising:
forming a recess portion (37) that is recessed from a surface of the current collector (31) between the mixture layer (32) and the holding portion (51).

12. The method according to any one of Claims 7 to 11, wherein the secondary battery (1) is a lithium-ion battery.
